(19) Europäisches Patentamt
European Patent Office
Office européen des brevets

(11) **EP 4 615 047 A1**

(12) **EUROPEAN PATENT APPLICATION**
published in accordance with Art. 153(4) EPC

(43) Date of publication:
**10.09.2025 Bulletin 2025/37**

(21) Application number: **23884940.0**

(22) Date of filing: **31.10.2023**

(51) International Patent Classification (IPC):
*H04W 28/02* (2009.01)

(52) Cooperative Patent Classification (CPC):
**H04W 28/02**

(86) International application number:
**PCT/CN2023/128585**

(87) International publication number:
**WO 2024/094011 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.11.2022 CN 202211372486**

(71) Applicant: **Vivo Mobile Communication Co., Ltd.
Dongguan, Guangdong 523863 (CN)**

(72) Inventors:
• **WANG, Lihui
Dongguan, Guangdong 523863 (CN)**
• **PAN, Xueming
Dongguan, Guangdong 523863 (CN)**

(74) Representative: **Lavoix
Bayerstraße 83
80335 München (DE)**

(54) **COMMUNICATION METHOD AND APPARATUS, AND TERMINALS**

(57) This application discloses a communication method and apparatus, and a terminal, and pertains to the field of wireless communication. The communication method according to an embodiment of this application includes: processing, by a terminal, a target transmission based on bandwidth capability; where the bandwidth capability of the terminal is a predetermined value, the predetermined value is less than or equal to 5 MHz, and the target transmission includes a first downlink transmission and/or a first uplink transmission.

<u>200</u>

S210

A terminal processes a target transmission based on bandwidth capability

FIG. 2

**Description**

**CROSS-REFERENCE TO RELATED APPLICATIONS**

This application claims priority to Chinese Patent Application No. 2022113724862, filed with the China National Intellectual Property Administration on November 3, 2022 and entitled "COMMUNICATION METHOD AND APPARATUS, AND TERMINAL", which is incorporated herein by reference in its entirety.

**TECHNICAL FIELD**

This application pertains to the field of wireless communication technologies, and particularly relates to a communication method and apparatus, and a terminal.

**BACKGROUND**

With the advancement of communication technologies, a new type of terminal apparatus-reduced capability (Reduced Capability, RedCap) terminal, has been introduced in the new radio (New Radio, NR) system. These terminals feature narrower bandwidth or fewer receive antennas compared to regular terminals. For example, as disclosed in Rel-18, RedCap terminals in frequency range 1 (Frequency Range 1, FR1) have a maximum bandwidth capability of only 5 MHz, and have lower terminal capabilities as such.

Under these circumstances, how RedCap terminals can effectively execute communication procedures, such as random access and small data transmission (Small Data Transmission, SDT), remains a critical technical challenge in the field.

**SUMMARY**

Embodiments of this application provide a communication method and apparatus, and a terminal, allowing RedCap terminals to execute communication procedures properly and thereby ensuring the communication quality.

A first aspect provides a communication method. This method includes: processing, by a terminal, a target transmission based on bandwidth capability; where the bandwidth capability of the terminal is a predetermined value, the predetermined value is less than or equal to 5 MHz, and the target transmission includes a first downlink transmission and/or a first uplink transmission.

A second aspect provides a communication apparatus, including: a processing module configured to process a target transmission based on bandwidth capability; where the bandwidth capability of a terminal is a predetermined value, the predetermined value is less than or equal to 5 MHz, and the target transmission includes a first downlink transmission and/or a first uplink transmission.

A third aspect provides a terminal. The terminal includes a processor and a memory, where the memory stores a program or instructions capable of running on the processor, and when the program or instructions are executed by the processor, the steps of the method according to the first aspect are implemented.

A fourth aspect provides a terminal, including a processor and a communication interface, where the communication interface is coupled to the processor, and the processor is configured to run a program or instructions to implement the steps of the method according to the first aspect.

A fifth aspect provides a communication system, including a terminal and a network-side device, where the terminal can be configured to implement the steps of the method according to the first aspect.

A sixth aspect provides a readable storage medium, where the readable storage medium stores a program or instructions. When the program or instructions are executed by a processor, the steps of the method according to the first aspect are implemented.

A seventh aspect provides a chip, where the chip includes a processor and a communication interface, the communication interface is coupled to the processor, and the processor is configured to run a program or instructions to implement the steps of the method according to the first aspect.

An eighth aspect provides a computer program product/program product. The computer program/program product is stored in a storage medium and executed by at least one processor to implement the steps of the method according to the first aspect.

In the embodiments of this application, the terminal processes the target transmission based on its own bandwidth capability. This relieves the restrictions on scheduling/configuration of the network side and allows the terminal to execute communication procedures properly, thereby ensuring the communication quality.

**BRIEF DESCRIPTION OF DRAWINGS**

FIG. 1 is a schematic structural diagram of a wireless communication system according to an example embodiment of this application;
FIG. 2 is a first schematic flowchart of a communication method according to an example embodiment of this application;
FIG. 3 is a second schematic flowchart of a communication method according to an example embodiment of this application;
FIG. 4 is a third schematic flowchart of a communication method according to an example embodiment of this application;
FIG. 5 is a schematic structural diagram of a communication apparatus according to an example embodiment of this application; and
FIG. 6 is a schematic diagram of a terminal according to an example embodiment of this application.

**DESCRIPTION OF EMBODIMENTS**

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that the technologies described in the embodiments of this application are not limited to long term evolution (Long Term Evolution, LTE)/LTE-Advanced (LTE-Advanced, LTE-A) systems, and may also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

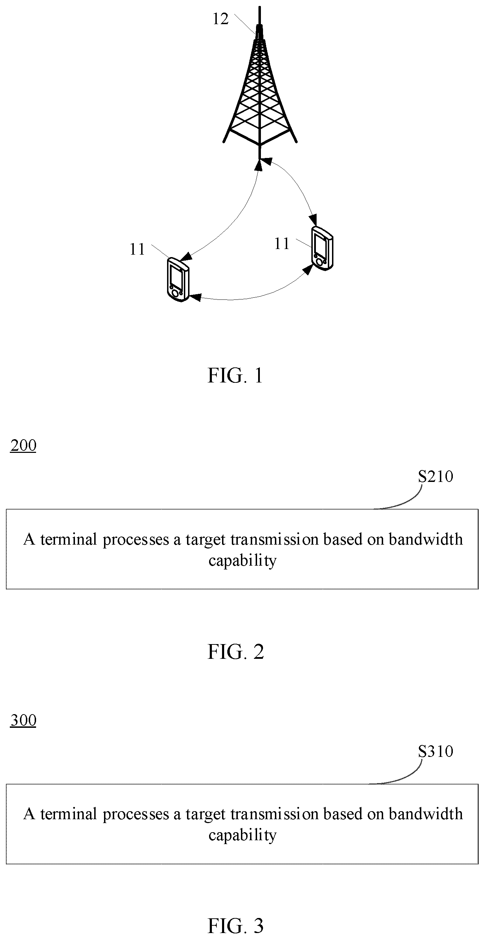

FIG. 1 is a block diagram of a wireless communication system to which embodiments of this application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), vehicle user equipment (Vehicle User Equipment, VUE), or pedestrian user equipment (Pedestrian User Equipment, PUE), a smart appliance (a home appliance with a wireless communication function, for example, a refrigerator, a television, a washing machine, or furniture), a game console, a personal computer (Personal Computer, PC), a teller machine, or a self-service machine. The wearable device includes a smart watch, a smart band, smart earphones, smart glasses, smart jewelry (a smart bangle, a smart bracelet, a smart ring, a smart necklace, a smart ankle bangle, a smart anklet, or the like), a smart wristband, smart clothing, or the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point (Access Point, AS), a wireless fidelity (Wireless Fidelity, Wi-Fi) node, or the like. The base station may be referred to as a Node B (Node B, NB), an evolved Node B (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home Node B (Home Node B, HNB), a home evolved Node B (Home evolved Node B), a transmission reception point (Transmission Reception Point, TRP), or another appropriate term in the art. Provided that the same technical effect is achieved, the base station is not limited to a specific technical term. It should be noted that in the embodiments of this application, the base station in the NR system is merely used as an example, and a specific type of the base station is not limited.

The following describes in detail the technical solution provided in the embodiments of this application by using some embodiments and application scenarios thereof with reference to the accompanying drawings.

As shown in FIG. 2, FIG. 2 is a schematic flowchart of a communication method 200 according to an example embodiment of this application. The method may be implemented by a terminal or others, specifically hardware and/or software installed on the terminal. In this embodiment, the method 200 includes at least the following steps.

S210. A terminal processes a target transmission based on bandwidth capability.

The bandwidth capability (or baseband bandwidth) of the terminal can be understood as signal processing capability or baseband data processing capability of the terminal. In this embodiment, the bandwidth capability of the terminal is a predetermined value, and the predetermined value is less than or equal to 5 MHz, for example, 5 MHz and 4 MHz. In other words, the terminal mentioned in this embodiment is a RedCap terminal, for example, the RedCap terminal in Rel-18.

It should be noted that when the bandwidth capability of the terminal is 5 MHz, the bandwidth capability of 5 MHz can also be considered as follows: for a 15 KHz subcarrier spacing (Subcarrier Spacing, SCS), frequency domain resources are 25, 28, or 27 physical resource blocks (Physical Resource Block, PRB); for a 30 KHz SCS, frequency domain resources are 11, 12, 13, or 14 PRBs.

The target transmission includes a first downlink transmission and/or a first uplink transmission. In this embodiment, depending on communication procedures, the first downlink transmission and the first uplink transmission may be independent of each other, or the first uplink transmission may be scheduled by the first downlink transmission. This is not limited herein. Certainly, the first downlink transmission and the first uplink transmission described in this embodiment may be initial transmissions or retransmissions.

For example, in a four-step random access procedure, the first downlink transmission may include an initial transmission and/or a retransmission of message 2 (message 2, MSG 2), and the first uplink transmission may include first feedback information and/or an initial transmission or a retransmission of MSG 3, where MSG 3 is scheduled by MSG 2 or target downlink control information (Downlink Control Information, DCI).

Optionally, the target DCI may be a DCI scrambled by a temporary cell radio network temporary identifier (Temporary Cell Radio Network Temporary Identifier, TC-RNTI), a cell (Cell, C)-RNTI or the like, which is not limited herein. Optionally, when MSG 3 is scheduled by the target DCI, the frequency domain resource allocation (Frequency Domain Resource Allocation, FDRA) field in the target DCI may indicate that a total amount of frequency domain resources for MSG 3 (for example, a retransmission of MSG 3) does not exceed a predetermined value.

The first feedback information corresponds to MSG 4. For example, the first feedback information is feedback information of a hybrid automatic repeat request acknowledgement (Hybrid Automatic Repeat Request Acknowledgement, HARQ-ACK) scheduled by MSG 4.

For another example, in a two-step random access procedure, the first downlink transmission may be an initial transmission and/or a retransmission of MSG B, and the first uplink transmission includes MSG A and/or second feedback information. The second feedback information corresponds to MSG B. For example, the second feedback information is feedback information of a HARQ-ACK scheduled by MSG B.

In a small data transmission procedure, the first uplink transmission includes a physical uplink shared channel (Physical Uplink Shared Channel, PUSCH) based on a configured grant (Configured Grant, CG) and/or a PUSCH based on random access (Random Access, RA).

In this embodiment, the terminal processes the target transmission based on its own bandwidth capability, relieving the restrictions on scheduling/configuration of the network side. For example, the frequency domain resources for the target transmission may exceed or may not exceed the bandwidth capability of the terminal. This allows the terminal to execute communication procedures properly, thereby ensuring the communication quality.

As shown in FIG. 3, FIG. 3 is a schematic flowchart of a communication method 300 according to an example embodiment of this application. The method may be implemented by a terminal or others, specifically hardware and/or software installed on the terminal. In this embodiment, the method 300 includes at least the following steps.

S310. A terminal processes a target transmission based on bandwidth capability.

The bandwidth capability of the terminal is a predetermined value, the predetermined value is less than or equal to 5 MHz, and the target transmission includes a first downlink transmission and/or a first uplink transmission.

It can be understood that the related descriptions in method embodiment 200 may be referenced for the implementation of S310. In addition, in a possible implementation, the manner in which the terminal to process the target transmission based on the bandwidth capability includes at least one of the following manners 1 to 6.

Manner 1. Expecting that a total amount of frequency domain resources used for the first downlink transmission does not exceed the predetermined value.

The "expecting" mentioned in manner 1 and subsequent embodiments can be understood that: the network-side device cannot guarantee that the amount of frequency domain resources used for downlink transmission or the total amount of frequency domain resources scheduled or configured for uplink transmission does not exceed the predetermined value.

For example, in manner 1, in a case that the terminal expects that the total amount of frequency domain resources used for the first downlink transmission does not exceed the predetermined value, the network-side device may perform the first downlink transmission using frequency domain resources that exceed the predetermined value or frequency domain resources that do not exceed the predetermined value. In other words, in manner 1, the network-side device cannot guarantee that the first downlink transmission is performed using frequency domain resources that do not exceed the predetermined value.

Manner 2. Not expecting that a total amount of frequency domain resources used for the first downlink transmission exceeds the predetermined value.

The "not expecting" mentioned in manner 2 and subsequent embodiments can be understood that: the network-side device guarantees that the amount of frequency domain resources used for downlink transmission or the total amount of frequency domain resources scheduled or configured for uplink transmission does not exceed the predetermined value.

For example, in manner 2, in a case that the terminal does not expect that the total amount of frequency domain resources used for the first downlink transmission exceeds the predetermined value, the network-side device is not allowed to perform the first downlink transmission using frequency domain resources that exceed the predetermined value. In other words, in manner 2, the network-side device guarantees that the first downlink transmission is performed using frequency domain resources that do not exceed the predetermined value.

Manner 3. Performing a first operation in a case that a total amount of frequency domain resources used for the first downlink transmission exceeds the predetermined value.

Manner 3 can be understood that: the terminal processes the first downlink transmission based on the total amount of frequency domain resources used for the first downlink transmission and the bandwidth capability of the terminal. Based on this, the implementation of manner 3 is described below in combination with different implementations.

Implementation 1

In a case that the total amount of frequency domain resources used for the first downlink transmission exceeds the predetermined value, the terminal demodulates the first downlink transmission and performs at least one of the following (11) to (15).

(11) Expecting that time from the last time unit occupied by the first downlink transmission to the first one time unit occupied by a second uplink transmission is not less than a first time threshold.

The "time unit" mentioned in this application may be symbols, slots, subslots, or the like, which is not limited herein.

In addition, the second uplink transmission is an uplink transmission scheduled by the first downlink transmission.

(12) Not expecting that time from the last time unit occupied by the first downlink transmission to the first one time unit occupied by a second uplink transmission is less than a first time threshold.

(13) Dropping a second uplink transmission in a case that time from the last time unit occupied by the first downlink transmission to the first one time unit occupied by the second uplink transmission is less than a first time threshold.

(14) Performing a second uplink transmission in a case that time from the last time unit occupied by the first downlink transmission to the first one time unit occupied by the second uplink transmission is not less than a first time threshold.

(15) Determining that a random access procedure corresponding to the first downlink transmission has failed in a case that time from the last time unit occupied by the first downlink transmission to the first one time unit occupied by a second uplink transmission is less than a first time threshold.

Optionally, the terminal behavior of determining that a random access procedure corresponding to the first downlink transmission has failed in a case that time from the last time unit occupied by the first downlink transmission to the first one time unit occupied by a second uplink transmission is less than a first time threshold, as described in (15), may further include: determining that the random access procedure corresponding to the first downlink transmission has failed in a case that the number of first downlink transmissions is a first quantity and the time from the last time unit occupied by the first quantity of first downlink transmissions to the first one time unit occupied by the second uplink transmission is less than the first time threshold.

The first quantity of first downlink transmissions include an initial transmission and/or a retransmission of the first downlink transmission. For example, when the first quantity is 1, the first downlink transmission is an initial transmission, and when the first quantity is an integer greater than 1, the first downlink transmission includes an initial transmission and at least one retransmission.

In this embodiment, the first quantity may be defined by a protocol or configured by a network, which is not limited herein.

Further, in a possible implementation, the first time threshold mentioned in this embodiment can be understood as the minimum time capacity required by the terminal to complete the processing of the first downlink transmission and prepare for the second uplink transmission. In this embodiment, the first time threshold may be defined by a protocol or configured by an upper layer, or may alternatively be determined based on first reference time and time required by the terminal to process a downlink transmission on a first designated frequency domain resource, and the first designated frequency domain resource is determined based on a resource difference between the total amount of frequency domain resources used for the first downlink transmission and the predetermined value. For example, in a case that the total amount of frequency domain resources used for the first downlink transmission are N1 MHz and the predetermined value is 5 MHz, the first designated frequency domain resource is (N1-5) MHz, and the first time threshold is determined based on the first reference time and the time required by the terminal to process the frequency domain resource of (N1-5) MHz.

Based on this, the first time threshold $T_{min}$ can be expressed by the following formula (1).

$$T_{min} = T1 + \left\lceil \frac{(N1\text{-}M)}{M} \right\rceil * N_{T,1} \text{, or} \quad T_{min} = T1\text{-}N_{T,1} + \left\lceil \frac{(N1)}{M} \right\rceil * N_{T,1} \quad (1)$$

Where, T1 is the first reference time, which may be predetermined by a protocol. For example, in a case that the first downlink transmission is a random access response (Random Access Response, RAR, namely, MSG 2), $T1 = N_{T,1} + N_{T,2} + 0.5$ ms. In a case that the first downlink transmission is an initial transmission or a retransmission of MSG 4 or MSG B, $T1 = N_{T,1} + 0.5$ ms. N1 is the total amount of frequency domain resources used for the first downlink transmission, M is the predetermined value, and $N_{T,1}$ is a duration of N1 time units corresponding to PDSCH processing time in terminal processing capability 1 when an additional physical downlink shared channel (Physical Downlink Shared Channel, PDSCH) demodulation reference signal (DeModulation-Reference Signal, DM-RS) is configured. $N_{T,2}$ is a duration of N2 time units corresponding to PUSCH processing time in terminal processing capability 1 when an additional physical uplink shared channel PUSCH DM-RS is configured.

It should be noted that the resource difference between the frequency domain resources used for the first downlink transmission and the bandwidth capability (the predetermined value) of the terminal is considered. This lowers the requirements for processing time of terminals with limited baseband bandwidth capability (that is, RedCap) during communication (for example, the first time threshold is greater than the lower limit on the processing time of other terminals in Rel-18), and relieves the restrictions on frequency domain resource scheduling/configuration of the network side. In this way, all terminal types can share the resource allocation for the first downlink transmission, ensuring the behavioral feasibility and reliability of terminals with limited baseband bandwidth capability.

Implementation 2

In a case that the number of first downlink transmissions is a second quantity and the total amount of frequency domain resources used for the second quantity of first downlink transmissions exceeds the predetermined value, at least one of the following (21) to (24) is performed. The second quantity of first downlink transmissions include an initial transmission and/or a retransmission of the first downlink transmission. For example, when the second quantity is 1, the first downlink transmission is an initial transmission, and when the second quantity is an integer greater than 1, the first downlink transmission includes an initial transmission and at least one retransmission. In this embodiment, the second quantity may be defined by a protocol or configured by a network, which is not limited herein.

(21) Not requesting the terminal to demodulate the first downlink transmission. (21) can be understood that the terminal may demodulate or may not demodulate the first downlink transmission.

(22) Skipping (or ignoring) demodulation of the first downlink transmission.

(23) Determining, by the terminal, whether to demodulate the first downlink transmission.

For example, the terminal may determine, based on implementation information, whether to demodulate. The implementation information of the terminal may be demodulation information for the first downlink transmission preset in the terminal during manufacturing (for example, demodulate or not demodulate), information of a communication procedure initiated by the terminal, or the like, which is not limited herein.

For example, in a case that the implementation information of the terminal is the demodulation information for the first downlink transmission preset in the terminal during manufacturing, the demodulation information for the first downlink transmission preset in the terminal may be that: the terminal demodulates or does not demodulate the first downlink transmission based on the preset demodulation information for the first downlink transmission when the total amount of frequency domain resources used for the first downlink transmission is greater than the predetermined value. This is not limited herein.

For another example, in a case that the implementation information of the terminal is a communication procedure initiated by the terminal, the communication procedure initiated by the terminal may be a random access procedure or the like. In one implementation, assuming that the communication procedure initiated by the terminal is a random access procedure, the terminal demodulates the first downlink transmission in a case that the terminal initiates the random access procedure and the total amount of frequency domain resources used for the first downlink transmission in the random access procedure exceeds the predetermined value.

(24) Determining that a random access procedure corresponding to the first downlink transmission has failed.

The processing of the first downlink transmission mentioned in manners 1 to 3 relieves the restrictions on the scheduling/configuration of the network-side device (for example, allowing the frequency domain resources used for the first downlink transmission to exceed the bandwidth capability of the terminal (for example, 5 MHz) and allowing the time for scheduling an uplink transmission not to meet the minimum requirement for the processing time of the terminal defined in Rel-18), while avoiding the effects on non-RedCap terminals (for example, only the downlink frequency domain resources of RedCap are limited within the predetermined value). In addition, the processing complexity of terminals with limited baseband bandwidth capability is reduced (for example, allowing such terminals to abort demodulation of the first downlink transmission). Alternatively, compared with the minimum requirement for the processing time of terminals defined in Rel-18, the first time threshold is used in the foregoing implementations to further lower the requirement for the processing time of terminals with limited baseband bandwidth capability. In this way, the flexibility of the entire communication network is improved from both the network side and the terminal side.

Manner 4. Expecting that a total amount of frequency domain resources configured or scheduled for the first uplink transmission does not exceed the predetermined value.

Manner 5. Not expecting that a total amount of frequency domain resources configured or scheduled for the first uplink transmission exceeds the predetermined value.

For manner 4 and manner 5, refer to related descriptions in manner 1 and manner 2, and details are not provided herein.

Manner 6. Performing, by the terminal, a second operation in a case that a total amount of frequency domain resources configured or scheduled for the first uplink transmission exceeds the predetermined value.

Manner 6 can be understood that: the terminal processes the first uplink transmission based on the total amount of frequency domain resources used for the first uplink transmission and the bandwidth capability of the terminal. Based on this, the implementation of manner 6 is described below in combination with different implementations.

**In** a case that the total amount of frequency domain resources configured or scheduled for the first uplink transmission exceeds the predetermined value, the terminal performs at least one of the following (31) to (34). The first uplink transmission is an uplink transmission scheduled by the second downlink transmission.

(31) Dropping the first uplink transmission.

(32) Dropping the first uplink transmission in a case that time from the last time unit occupied by a second downlink transmission to the first one time unit occupied by the first uplink transmission is less than a second time threshold.

(33) Performing the first uplink transmission in a case that time from the last time unit occupied by a second downlink transmission to the first one time unit occupied by the first uplink transmission is less than a second time threshold.

(34) Determining that a random access procedure corresponding to the first uplink transmission has failed. Optionally, the determining that a random access procedure corresponding to the first uplink transmission has failed includes: determining that the random access procedure corresponding to the first uplink transmission has failed in a case that the number of first uplink transmissions is a third quantity and the third quantity of first uplink transmissions are scheduled by the third quantity of second downlink transmissions received continuously; where the third quantity of second downlink transmissions include an initial transmission and/or a retransmission of the second downlink transmission. For example, when the third quantity is 1, the second downlink transmission is an initial transmission, and when the third quantity is an integer greater than 1, the second downlink transmission includes an initial transmission and at least one retransmission. In this embodiment, the third quantity may be defined by a protocol or configured by a network, which is not limited herein.

Further, similar to the first time threshold, the second time threshold mentioned in this embodiment can also be understood as the minimum time capacity required by the terminal to complete the processing of the second downlink transmission and prepare for the first uplink transmission. In this embodiment, the second time threshold may be defined by a protocol or configured by a network side, or may alternatively be determined based on second reference time and preparation time required by the terminal to process an uplink transmission on a second designated frequency domain resource, and the second designated frequency domain resource is determined based on a resource difference between the amount of frequency domain resources used for the first uplink transmission and the predetermined value. For example, in a case that the total amount of frequency domain resources used for the first uplink transmission is N2 MHz and the predetermined value is 5 MHz, the second designated frequency domain resource is (N2-5) MHz, and the second time threshold is determined based on the second reference time and preparation time required by the terminal to transmit an uplink transmission on the frequency domain resource of (N2-5) MHz.

Based on this, in an implementation, the second time threshold $T'_{min}$ can be expressed by the following formula (2).

$$T'_{min} = T2 + \left\lceil \frac{(N2\text{-}M)}{M} \right\rceil * N_{T,2} \quad \text{or} \quad T'_{min} = T2 - N_{T,2} + \left\lceil \frac{(N2)}{M} \right\rceil * N_{T,2} \qquad (2)$$

Where, T2 is the second reference time, which may be predetermined by a protocol. For example, in a case that the first uplink transmission is scheduled by an RAR (that is, the second downlink transmission), $T2 = N_{T,1} + N_{T,2} + 0.5$ ms. In a case that the first uplink transmission is scheduled by a TC-RNTI scrambled DCI (that is, the second downlink transmission) with an uplink grant (UL grant), $T1 = N_{T,2}$ ms. N2 is the total amount of frequency domain resources used for the first uplink transmission, M is the predetermined value, and $N_{T,1}$ is a duration of N1 time units corresponding to PDSCH processing time in terminal processing capability 1 when an additional physical downlink shared channel PDSCH demodulation reference signal DM-RS is configured. $N_{T,2}$ is a duration of N2 time units corresponding to PUSCH processing time in terminal processing capability 1 when an additional physical uplink shared channel PUSCH DM-RS is configured.

It should be noted that the resource difference between the frequency domain resources used for the first uplink transmission and the bandwidth capability (the predetermined value) of the terminal is considered. This lowers the requirements for processing time of baseband bandwidth-limited terminals during communication (for example, the second time threshold is greater than the lower limit on the processing time of terminals in Rel-18), and relieves the restrictions on frequency domain resource scheduling/configuration of the network side, ensuring the behavioral feasibility and reliability of terminals with limited baseband bandwidth capability.

The processing of the first uplink transmission mentioned in manners 4 to 6 relieves the restrictions on the scheduling/configuration of the network-side device (for example, allowing the frequency domain resources used for the first uplink transmission to exceed the bandwidth capability of the terminal (for example, 5 MHz) and allowing the time for scheduling an uplink transmission not to meet the minimum requirement for the processing time of the terminal defined in Rel-18), while avoiding the effects on non-RedCap terminals (for example, only the uplink frequency domain resources of RedCap are limited within the predetermined value). In addition, the processing complexity of terminals with limited baseband bandwidth capability is reduced (for example, allowing such terminals to abort the first uplink transmission). Alternatively, compared with the minimum requirement for the processing time of terminals defined in Rel-18, the second time threshold is used in the foregoing implementations to further lower the requirement for the processing time of terminals. In this way, the flexibility of the entire communication network is improved from both the network side and the terminal side.

It should be noted that: regarding the first uplink transmission, the first downlink transmission, the second uplink transmission, and the second uplink transmission mentioned in manners 1 to 6, during practical communication, the first uplink transmission and the second uplink transmission may be the same or different, and the first downlink transmission and the second downlink transmission may also be the same or different. This is not limited herein.

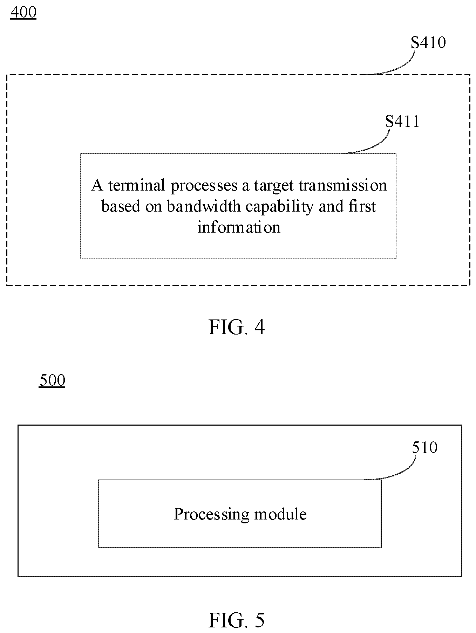

As shown in FIG. 4, FIG. 4 is a schematic flowchart of a communication method 400 according to an example embodiment of this application. The method may be implemented by a terminal or others, specifically hardware and/or software installed on the terminal. In this embodiment, the method 400 includes at least the following steps.

S410. A terminal processes a target transmission based on bandwidth capability.

The bandwidth capability of the terminal is a predetermined value, the predetermined value is less than or equal to 5 MHz, and the target transmission includes a first downlink transmission and/or a first uplink transmission.

It can be understood that the related descriptions in method embodiment 200 and/or 300 may be referenced for the implementation of S410. In addition, in a possible implementation, as shown in FIG. 4, the processing, by a terminal, a target transmission based on bandwidth capability may include S411: the terminal processes the target transmission based on the bandwidth capability and first information.

The first information includes at least one of the following (41) to (44).

(41) Whether the terminal transmits terminal capability information.

The terminal capability information includes that: maximum supported bandwidth capability of the terminal is 20 MHz, and/or maximum supported baseband bandwidth capability of the terminal is 5 MHz. In addition, in an implementation, the terminal capability information may further include all (or required) capability information of the RedCap terminal defined in Rel-17, all (or required) capability information of the RedCap terminal defined in Rel-18, and the like, which is not limited herein.

(42) Whether the terminal transmits second information, where the second information includes terminal identification information or early terminal identification information, and the terminal identification information or early terminal identification information is used to indicate to a network-side device that a type of the terminal at least includes that the bandwidth capability of the terminal is the predetermined value. In an implementation, the early terminal identification information may include the early identification information of the RedCap terminal defined in Rel-17, and/or the early identification information of the RedCap terminal defined in Rel-18.

In an implementation, during a random access procedure, the second information may be carried by MSG 1 and/or MSG 3 for transmission. For example, MSG 1 may carry shared second information (for example, the early identification information of the RedCap terminal defined in Rel-17), and/or MSG 3 carries shared or specific second information (for example, the early identification information of the RedCap terminal defined in Rel-18). Based on this, in this embodiment, the MSG 1 resource of Rel-17 RedCap carrying the early terminal identification information is reused in Rel-18 RedCap. This prevents further division of physical random access channel (Physical Random Access Channel, PRACH)/MSG 1 resources and ensures the reliability of the communication procedure.

(43) Whether the terminal is configured with a separate (or separate) initial bandwidth part (Bandwidth part, BWP), where the initial BWP includes an initial uplink (Up-Link, UL) BWP and/or an initial downlink (Down Link, DL) BWP. In this embodiment, the separate initial BWP includes at least one of the following: maximum bandwidth of the separate initial BWP does not exceed 20 MHz; and maximum bandwidth of the separate initial BWP does not exceed 5 MHz.

In an implementation, for a cell supporting both Rel-17 RedCap terminals and Rel-18 RedCap terminals, if the network-side device configures a separate initial BWP for Rel-17 RedCap terminals, the maximum bandwidth of this separate initial BWP may be 20 MHz, and Rel-18 RedCap terminals can share the same separate initial DL/UL BWP with Rel-17 RedCap terminals. Otherwise, the Rel-18 RedCap terminals and Rel-17 RedCap terminals share the same initial BWP as non (non)-RedCap terminals.

For a cell supporting only Rel-18 RedCap terminals and non-RedCap terminals, the network-side device may adopt the same mechanism specified in relevant protocols for configuring a separate initial BWP for Rel-17 RedCap terminals to configure a separate initial BWP for Rel-18 RedCap terminals. However, no Rel-17 RedCap terminals exist in the cell at this time. Therefore, the maximum bandwidth of the separate initial BWP configured for the Rel-18 RedCap terminals by the network-side device may be a predetermined value, for example, 5 MHz.

(44) Carrier information of third information, where the third information includes the terminal capability information and/or the second information. The carrier information may also be referred to as early indication (early indication) or RedCap indication. In this embodiment, the carrier information carrying the third information is used to indicate whether the third information is transmitted via MSG 1 or MSG 3.

It should be noted that: for example, the early terminal identification information may be transmitted by the terminal in a case that the network-side device has enabled the early terminal identification indication, or may be transmitted by the terminal spontaneously. This is not limited herein.

Based on this, when the terminal is processing the target transmission based on the bandwidth capability and the first information, in a case that the first information includes at least one of those: the terminal has transmitted the terminal capability information, the second information, the carrier information of the second information, and the terminal is configured with a separate initial BWP, the terminal performs at least one of the following (51) to (55):

(51) expecting that a total amount of frequency domain resources used for the target transmission does not exceed the predetermined value;
(52) demodulating the first downlink transmission in a case that the total amount of frequency domain resources used for the first downlink transmission exceeds the predetermined value, and expecting that the time from the last time unit for receiving the first downlink transmission to the first one time unit occupied by the second uplink transmission is not less than a first time threshold;
(53) determining that the random access procedure has failed in a case that the first downlink transmission is the first-time retransmission and the total amount of frequency domain resources used for the first downlink transmission exceeds the predetermined value;
(54) expecting that time from the last time unit for receiving the first downlink transmission to the first one time unit occupied by the first uplink transmission is not less than the second time threshold in a case that the total amount of frequency domain resources used for the first uplink transmission exceeds the predetermined value; and
(55) determining that the random access procedure has failed in a case that the first uplink transmission is an uplink transmission scheduled for the 1st retransmission and the total amount of frequency domain resources used for the first uplink transmission exceeds the predetermined value.

It can be understood that related descriptions in method embodiments 200 and 300 can be referenced for the implementation of (51) to (55), with the same or equivalent technical effects achieved. Details are not provided herein.

Based on the descriptions of the method embodiments 200 to 400, the communication method provided in this application is further described in combination with examples 1 to 3 below. It should be noted that in this embodiment, the bandwidth capability of Rel-17 RedCap terminals is 20 MHz, and the bandwidth capability of Rel-18 RedCap terminals is 5 MHz.

Example 1

The four-step random access procedure is used as an example. Assuming that the bandwidth capability of the terminal (Rel-18 RedCap terminal) is 5 MHz, early terminal indication in MSG 1 is enabled by the network-side device, the terminal transmits MSG 1 to the network-side device for random access, and MSG 1 carries the second information (that is, early terminal identification information), the terminal may perform at least one of the following:

expecting the total amount of frequency domain resources used by the RAR PDSCH to be within 5 MHz. In other words, if the network-side device correctly receives MSG 1 from the terminal, the network-side device should ensure that the total amount of frequency domain resources for the RAR of the terminal does not exceed 5 MHz.

If the early terminal indication in MSG 1 is shared with Rel-17 RedCap, the total amount of frequency domain resources for the RARs of Rel-17 RedCap and Rel-18 RedCap does not exceed 5 MHz.

If the early terminal indication in MSG 1 is specific to Rel-18 RedCap (a new indication for Rel-18 RedCap), the total amount of frequency domain resources for the RAR of Rel-18 RedCap does not exceed 5 MHz, and the total amount of frequency domain resources for the RAR of Rel-17 RedCap may exceed 5 MHz.

Alternatively, if the terminal receives the RAR PDSCH and the total amount of frequency domain resources used by the RAR PDSCH exceeds 5 MHz (that is, the total frequency domain resources used by the RAR PDSCH are allowed to exceed 5 MHz), the terminal expects that a time interval between the last symbol of the time slot occupied by the RAR PDSCH and the 1st symbol of the MSG 3 transmission scheduled by the RAR is not less than the minimum time capacity required by the terminal to process the RAR PDSCH and prepare for MSG 3 transmission, that is, the first time threshold $T_{min}$. For example,

$$T\min = N_{T,1} + N_{T,2} + 0.5 + \left\lceil \frac{N1-5}{5} \right\rceil * N_{T,1}$$

ms or

$$T\min = \left\lceil \frac{N1}{5} \right\rceil * N_{T,1} + N_{T,2} + 0.5$$

ms, where N1 is the total amount of frequency domain resources used by the RAR PDSCH.

Example 2

The four-step random access procedure is used as an example. It is assumed that the bandwidth capability of the terminal (Rel-18 RedCap terminal) is 5 MHz, and the early terminal indication in MSG 1 is not enabled by the network-side device (RedCap indication in MSG 1 not enabled (enable)). Based on this, if the terminal transmits MSG 1 to the network-side device for random access, that is, the network-side device learns about that a terminal initiates a random access procedure in the cell based on the received MSG 1, the total amount of frequency domain resources used by the RAR PDSCH transmitted by the network-side device may not exceed 5 MHz or may exceed 5 MHz, based on the implementation of the network-side device. In a case that the total amount of frequency domain resources used by the RAR PDSCH transmitted by the network-side device exceeds 5 MHz, the terminal may perform at least one of the following.

If the time interval between the last symbol of the time slot occupied by the RAR PDSCH and the 1st symbol of the MSG 3 transmission scheduled by the RAR is not less than the minimum time capacity $T_{min}$ required by the Rel-18 terminal to process the RAR PDSCH and prepare for MSG 3 transmission (that is, less than the first time threshold), the terminal transmits MSG 3 after demodulating MSG 2. Otherwise, the terminal drops the MSG 3 transmission or the terminal aborts the MSG 2 demodulation.

Alternatively, the terminal aborts the MSG 2 demodulation.

Example 3

The four-step random access procedure is used as an example. Assuming that the bandwidth capability of a terminal (for example, an Rel-18 RedCap terminal) is 5 MHz, the terminal may always expect the amount of scheduled frequency domain resources for MSG 4 to be within 5 MHz. Alternatively, the terminal may always expect the amount of scheduled frequency domain resources for MSG 4 to be within 20 MHz.

However, if the second information (for example, early identification information of an Rel-18 RedCap terminal) is introduced or defined in MSG 3 for the terminal, that is, a logical channel identity (Logical Channel Identity, LCID) different from that of an Rel-17 RedCap terminal is allocated to an Rel-18 RedCap terminal, the terminal always expects the amount of scheduled frequency domain resources for MSG 4 to be within 5 MHz. Otherwise, the terminal expects the amount of scheduled frequency domain resources for MSG 4 to be within 20 MHz.

Based on this, when the total amount of frequency domain resources scheduled by the network-side device for MSG 4 exceeds 5 MHz, the terminal may perform any one of the following:

expecting that the time interval between the last symbol of the time slot occupied by the MSG 4 PDSCH and the 1st symbol of the PUCH transmission with a HARQ-ACK feedback to MSG 4 is not less than the minimum time capacity required by the Rel-18 terminal to process the MSG 4 PDSCH and prepare for PUCH transmission, that is, the first time threshold;

If the time interval between the last symbol of the time slot occupied by the MSG 4 PDSCH and the 1st symbol of the PUCH transmission with a HARQ-ACK feedback to MSG 4 is not less than the minimum time capacity $T_{min}$ required by the Rel-18 terminal to process the MSG 4 PDSCH and prepare for PUCH transmission, the terminal transmits the PUCH with the HARQ-ACK after demodulating MSG 4. Otherwise, the terminal drops the PUCH transmission or aborts the MSG 4 demodulation;

The terminal drops the PUCH transmission or aborts the MSG 4 demodulation.

Example 4

The four-step random access procedure is used as an example. Assuming that the bandwidth capability of a terminal (for example, an Rel-18 RedCap terminal) is 5 MHz and the early terminal indication in MSG 1 is enabled by the network-side device, the terminal transmits MSG1 (carrying the early identification information of the Rel-17 RedCap terminal or the early identification information of the Rel-18 RedCap terminal) to the network-side device for random access and receives MSG 2. The behavior of the Rel-18 RedCap terminal includes: the Rel-18 RedCap terminal expects that for the initial transmission of MSG 3 scheduled by the UL grant in the RAR and/or the retransmission of MSG 3 scheduled by DCI format (format) 0_0 scrambled by the TC-RNTI carrying the UL grant, the frequency domain resource indicated by the FDRA field is within 5 MHz.

Otherwise, if the early terminal indication in MSG 1 is not enabled by the network-side device, the terminal transmits MSG 1 to the network-side device for random access and receives MSG 2. In this case, the behavior of the Rel-18 RedCap terminal includes allowing the amount of frequency domain resources indicated by the FDRA field of MSG 3 scheduled by RAR UL grant and/or DCI format 0_0 scrambled by TC-RNTI carrying the UL grant to exceed 5 MHz. When the amount of frequency domain resources for MSG 3 received by the Rel-18 RedCap terminal exceeds 5 MHz, the Rel-18 RedCap terminal aborts the MSG 3 transmission.

It can be understood that for MSG 3, the transport block size (Transport Block Size, TBS) is 56 bits or 72 bits in most cases, and the required amount of resources does not exceed 5 MHz. Therefore, there is no great limitation on a network (Network, NW) to ensure that the amount of resources allocated for MSG 3 PUSCH is within 5 MHz.

Example 5

The four-step random access procedure is used as an example. Assuming that the bandwidth capability of a terminal (for example, an Rel-18 RedCap terminal) is 5 MHz and the early terminal indication in MSG 1 is not enabled by the network-side device, the total amounts of frequency domain resources used by MSG 2 and MSG 3 can each exceed 5 MHz, while for MSG 4, since the Rel-17 RedCap indication must be transmitted in MSG 3, the amount of frequency domain resources for MSG 4 cannot exceed 5 MHz.

Based on this, in a case that the network side does not enable the early terminal indication in MSG 1 but learns about that a terminal has initiated the random access procedure in the cell based on the received MSG 1, for MSG 2, if the amount of frequency domain resources scheduled for the RAR PDSCH exceeds 5 MHz, behavior of the Rel-18 RedCap terminal includes at least one of (a) and (b).

(a) If the time interval between the last symbol of the time slot occupied by the RAR PDSCH and the 1st symbol of the MSG 3 transmission scheduled by the RAR is not less than the minimum time capacity $T_{min}$ required by the terminal to process the RAR PDSCH and prepare for MSG 3 transmission (that is, first time threshold), the terminal transmits MSG 3 after demodulating MSG 2. Otherwise, the terminal drops the MSG 3 transmission or the terminal aborts the MSG 2 demodulation.

(b) The terminal aborts the MSG 2 demodulation.

For MSG 3, the amount of frequency domain resources indicated by the FDRA field of MSG 3 scheduled by RAR UL grant and/or DCI format 0_0 scrambled by TC-RNTI carrying the UL grant is allowed to exceed 5 MHz. When the amount of frequency domain resources for MSG 3 received by the Rel-18 RedCap terminal exceeds 5 MHz, the Rel-18 RedCap terminal aborts the MSG 3 transmission.

For MSG 4, the terminal always expects the amount of scheduled frequency domain resources for MSG 4 to be within 5 MHz.

The communication methods 200 to 400 provided in the embodiments of this application may be executed by a communication apparatus. In the embodiments of this application, the communication apparatus according to an embodiment of this application is described assuming that the communication method is executed by a communication apparatus.

As shown in FIG. 5, FIG. 5 is a schematic structural diagram of a communication apparatus 500 according to an example embodiment of this application. The apparatus 500 includes a processing module 510 configured to process a target transmission based on bandwidth capability; where the bandwidth capability of a terminal is a predetermined value, the predetermined value is less than or equal to 5 MHz, and the target transmission includes a first downlink transmission and/or a first uplink transmission.

Optionally, the apparatus 500 further includes a transmission module configured to perform the target transmission.

Optionally, the processing, by the processing module 510, a target transmission based on bandwidth capability includes at least one of the following: expecting that a total amount of frequency domain resources used for the first downlink transmission does not exceed the predetermined value; not expecting that a total amount of frequency domain resources used for the first downlink transmission exceeds the predetermined value; performing a first operation in a case that a total amount of frequency domain resources used for the first downlink transmission exceeds the predetermined value; expecting that a total amount of frequency domain resources configured or scheduled for the first uplink transmission does not exceed the predetermined value; not expecting that a total amount of frequency domain resources configured or scheduled for the first uplink transmission exceeds the predetermined value; and performing, by the terminal, a second operation in a case that a total amount of frequency domain resources configured or scheduled for the first uplink transmission exceeds the predetermined value.

Optionally, the performing, by the processing module 510, a first operation in a case that a total amount of frequency domain resources used for the first downlink transmission exceeds the predetermined value includes: in a case that the total amount of frequency domain resources used for the first downlink transmission exceeds the predetermined value, demodulating the first downlink transmission and performing at least one of the following: expecting that time from the last time unit occupied by the first downlink transmission to the first one time unit occupied by a second uplink transmission is not less than a first time threshold; not expecting that time from the last time unit occupied by the first downlink transmission to the first one time unit occupied by a second uplink transmission is less than a first time threshold; dropping a second uplink transmission in a case that time from the last time unit occupied by the first downlink transmission to the first one time unit occupied by the second uplink transmission is less than a first time threshold; performing a second uplink transmission in a case that time from the last time unit occupied by the first downlink transmission to the first one time unit occupied by the second uplink transmission is not less than a first time threshold; and determining that a random access procedure corresponding to the first downlink transmission has failed in a case that time from the last time unit occupied by the first downlink transmission to the first one time unit occupied by a second uplink transmission is less than a first time threshold; where the second uplink transmission is an uplink transmission scheduled by the first downlink transmission.

Optionally, the determining that a random access procedure corresponding to the first downlink transmission has failed in a case that time from the last time unit occupied by the first downlink transmission to the first one time unit occupied by a second uplink transmission is less than a first time threshold includes: determining that the random access procedure corresponding to the first downlink transmission has failed in a case that the number of first downlink transmissions is a first quantity and the time from the last time unit occupied by the first quantity of first downlink transmissions to the first one time unit occupied by the second uplink transmission is less than the first time threshold; where the first quantity of first downlink transmissions include an initial transmission and/or a retransmission of the first downlink transmission.

Optionally, the performing, by the processing module 510, a first operation in a case that a total amount of frequency domain resources used for the first downlink transmission exceeds the predetermined value includes: in a case that the number of first downlink transmissions is a second quantity and the total amount of frequency domain resources used for the second quantity of first downlink transmissions exceeds the predetermined value, performing at least one of the following: not requesting the terminal to demodulate the first downlink transmission; skipping demodulation of the first downlink transmission; determining, by the terminal, whether to demodulate the first downlink transmission; and determining that a random access procedure corresponding to the first downlink transmission has failed; where the second quantity of first downlink transmissions include an initial transmission and/or a retransmission of the first downlink transmission.

Optionally, the second operation includes at least one of the following: dropping the first uplink transmission; dropping the first uplink transmission in a case that time from the last time unit occupied by a second downlink transmission to the first one time unit occupied by the first uplink transmission is less than a second time threshold; performing the first uplink transmission in a case that time from the last time unit occupied by a second downlink transmission to the first one time unit occupied by the first uplink transmission is less than a second time threshold; and determining that a random access procedure corresponding to the first uplink transmission has failed; where the first uplink transmission is an uplink transmission scheduled by the second downlink transmission.

Optionally, the determining that a random access procedure corresponding to the first uplink transmission has failed includes: determining that the random access procedure corresponding to the first uplink transmission has failed in a case that the number of first uplink transmissions is a third quantity and the third quantity of first uplink transmissions are scheduled by the third quantity of second downlink transmissions received continuously; where the third quantity of second downlink transmissions include an initial transmission and/or a retransmission of the second downlink transmission.

Optionally, the processing, by the processing module 510, a target transmission based on bandwidth capability includes: processing the target transmission based on the bandwidth capability and first information; where the first information includes at least one of the following: whether the terminal transmits terminal capability information; whether the terminal transmits second information, where the second information includes terminal identification information or early terminal identification information, and the terminal identification information or early terminal identification information is used to indicate to a network-side device that a type of the terminal at least includes that the bandwidth capability of the terminal is the predetermined value; whether the terminal is configured with a separate initial bandwidth part BWP, where the initial BWP includes an initial uplink BWP and/or an initial downlink BWP; and carrier information of third information, where the third information includes the terminal capability information and/or the second information.

Optionally, the processing, by the processing module 510, the target transmission based on the bandwidth capability and first information includes: in a case that the first information includes at least one of those: the terminal has transmitted the terminal capability information, the second information, the carrier information of the second information, and the terminal is configured with a separate initial BWP, performing at least one of the following: expecting that a total amount of frequency domain resources used for the target transmission does not exceed the predetermined value; demodulating the first downlink transmission in a case that the total amount of frequency domain resources used for the first downlink transmission exceeds the predetermined value, and expecting that the time from the last time unit for receiving the first downlink transmission to the first one time unit occupied by the second uplink transmission is not less than a first time threshold; determining that the random access procedure has failed in a case that the first downlink transmission is the first-time retransmission and the total amount of frequency domain resources used for the first downlink transmission exceeds the predetermined value; expecting that time from the last time unit for receiving the first downlink transmission to the first one time unit occupied by the first uplink transmission is not less than the second time threshold in a case that the total amount of frequency domain resources used for the first uplink transmission exceeds the predetermined value; and determining that the random access procedure has failed in a case that the first uplink transmission is an uplink transmission scheduled for the 1st retransmission and the total amount of frequency domain resources used for the first uplink transmission exceeds the predetermined value.

Optionally, the first time threshold is determined based on first reference time and time required by the terminal to process a downlink transmission on a first designated frequency domain resource, and the first designated frequency domain resource is determined based on a resource difference between the total amount of frequency domain resources used for the first downlink transmission and the predetermined value.

Optionally, the first time threshold $T_{min}$ is determined using the following formula:

$$T_{min} = T1 + \left\lceil \frac{(N1\text{-}M)}{M} \right\rceil * N_{T,1}$$ ; where T1 is the first reference time, N1 is the total amount of frequency domain resources used for the first downlink transmission, M is the predetermined value, and $N_{T,1}$ is a duration of N1 time units corresponding to PDSCH processing time in terminal processing capability 1 when an additional physical downlink shared channel PDSCH demodulation reference signal DM-RS is configured.

Optionally, the second time threshold is determined based on second reference time and preparation time required by the terminal to transmit an uplink transmission on a second designated frequency domain resource, and the second designated frequency domain resource is determined based on a resource difference between the frequency domain resource used for the first uplink transmission and the predetermined value.

Optionally, the second time threshold $T'_{min}$ is determined using the following formula:

$$T'_{min} = T2 + \left\lceil \frac{(N2\text{-}M)}{M} \right\rceil * N_{T,2}$$ ; where T2 is the second reference time, N2 is the total amount of frequency domain resources used for the first uplink transmission, M is the predetermined value, and $N_{T,2}$ is a duration of N2 time units corresponding to PUSCH processing time in terminal processing capability 1 when an additional physical uplink shared channel PUSCH DM-RS is configured.

Optionally, the terminal capability information includes at least one of the following: maximum supported bandwidth capability is 20 MHz; and maximum supported baseband bandwidth capability is 5 MHz.

Optionally, the separate initial BWP includes at least one of the following: maximum bandwidth of the separate initial BWP does not exceed 20 MHz; and maximum bandwidth of the separate initial BWP does not exceed 5 MHz.

Optionally, the second information is carried by messages MSG 1 and/or MSG 3 for transmission.

Optionally, MSG 1 carries shared second information, and/or MSG 3 carries shared or specific second information.

Optionally, at least one of the following is satisfied: in a four-step random access procedure, the first downlink transmission includes an initial transmission and/or a retransmission of MSG 2, and the first uplink transmission includes first feedback information and/or initial transmission or retransmission of MSG 3, where MSG 3 is scheduled by MSG 2 or target DCI and the first feedback information corresponds to MSG 4; in a two-step random access procedure, the first downlink transmission is an initial transmission and/or a retransmission of MSG B, and the first uplink transmission includes MSG A and/or second feedback information, where the second feedback information corresponds to MSG B; and in a small data transmission procedure, the first uplink transmission includes a PUSCH based on a configured grant and/or a PUSCH based on random access.

The communication apparatus 500 according to this embodiment of this application may be an electronic device, for example, an electronic device with an operating system, or may be a component in an electronic device, for example, an integrated circuit or a chip. The electronic device may be a terminal or another device except the terminal. For example, the terminal may include but is not limited to a type of the foregoing terminal 11, and another device may be a server, a network attached storage (Network Attached Storage, NAS), or the like, which is not specifically limited in the embodiments of this application.

The communication apparatus provided in this embodiment of this application can implement the processes implemented by the method embodiments illustrated in FIG. 2 to FIG. 4, with the same technical effects achieved. To avoid repetition, details are not described herein again.

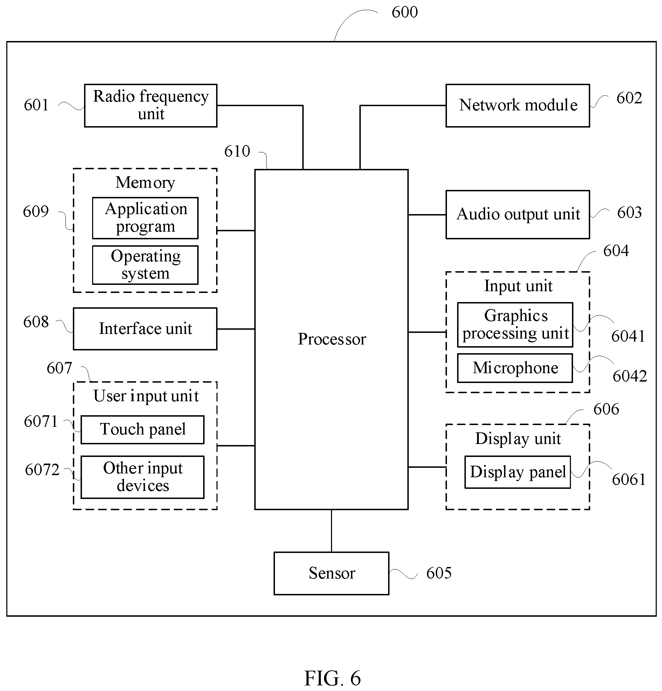

An embodiment of this application further provides a terminal, including a processor and a communication interface, where the communication interface is coupled to the processor, and the processor is configured to run a program or instructions to implement the steps of the method according to the method embodiments 200 to 400. The terminal embodiment corresponds to the foregoing method embodiments used on the terminal side. All the processes and implementations of the foregoing method embodiments can be applied to the terminal embodiment, with the same technical effects achieved. Specifically, FIG. 6 is a schematic diagram of a hardware structure of a terminal implementing the embodiments of this application.

A terminal 600 includes but is not limited to at least some components of a radio frequency unit 601, a network module 602, an audio output unit 603, an input unit 604, a sensor 605, a display unit 606, a user input unit 607, an interface unit 608, a memory 609, and a processor 610.

Persons skilled in the art can understand that the terminal 600 may further include a power source (for example, a battery) for supplying power to the components. The power source may be logically connected to the processor 610 through a power management system. In this way, functions such as charge management, discharge management, and power consumption management are implemented by using the power management system. The structure of the terminal shown in FIG. 6 does not constitute a limitation on the terminal. The terminal may include more or fewer components than shown in the figure, or combine some components, or have a different component arrangement. Details are not described herein again.

It should be understood that in the embodiments of this application, the input unit 604 may include a graphics processing unit (Graphics Processing Unit, GPU) 6041 and a microphone 6042. The graphics processing unit 6041 processes image data of a static picture or a video that is obtained by an image capture apparatus (for example, a camera) in a video capture mode or an image capture mode. The display unit 606 may include a display panel 6061. The display panel 6061 may be configured in a form of a liquid crystal display, an organic light-emitting diode, or the like. The user input unit 607 includes at least one of a touch panel 6071 and other input devices 6072. The touch panel 6071 is also referred to as a touchscreen. The touch panel 6071 may include two parts: a touch detection apparatus and a touch controller. The other input devices 6072 may include but are not limited to a physical keyboard, a functional button (such as a volume control button or a power on/off button), a trackball, a mouse, and a joystick. Details are not described herein again.

In the embodiments of this application, after receiving downlink data from the network-side device, the radio frequency unit 601 may transmit it to the processor 610 for processing. In addition, the radio frequency unit 601 may transmit uplink data to the network-side device. Generally, the radio frequency unit 601 includes but is not limited to an antenna, an amplifier, a transceiver, a coupler, a low noise amplifier, a duplexer, and the like.

The memory 609 may be configured to store software program or instructions, and various data. The memory 609 may mainly include a first storage area where the program or instructions are stored and a second storage area where data is stored. The first storage area may store an operating system, an application program or instructions required by at least one function (for example, an audio playing function or an image playing function), and the like. Further, the memory 609 may include a volatile memory or non-volatile memory, or the memory 609 may include both volatile and non-volatile memories. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 609 in this embodiment of this application includes but is not limited to these and any other suitable types of memories.

The processor 610 may include one or more processing units. Optionally, the processor 610 integrates an application processor and a modem processor. The application processor mainly processes operations involving an operating system, a user interface, an application program, and the like. The modem processor mainly processes wireless communication signals, for example, a baseband processor. It can be understood that the modem processor may alternatively be not integrated in the processor 610.

The processor 610 is configured to process a target transmission based on bandwidth capability; where the bandwidth capability of a terminal is a predetermined value, the predetermined value is less than or equal to 5 MHz, and the target transmission includes a first downlink transmission and/or a first uplink transmission.

Optionally, the processing, by the processor 610, a target transmission based on bandwidth capability includes at least one of the following: expecting that a total amount of frequency domain resources used for the first downlink transmission does not exceed the predetermined value; not expecting that a total amount of frequency domain resources used for the first downlink transmission exceeds the predetermined value; performing a first operation in a case that a total amount of frequency domain resources used for the first downlink transmission exceeds the predetermined value; expecting that a total amount of frequency domain resources configured or scheduled for the first uplink transmission does not exceed the predetermined value; not expecting that a total amount of frequency domain resources configured or scheduled for the first uplink transmission exceeds the predetermined value; and performing, by the terminal, a second operation in a case that a total amount of frequency domain resources configured or scheduled for the first uplink transmission exceeds the predetermined value.

Optionally, the performing, by the processor 610, a first operation in a case that a total amount of frequency domain resources used for the first downlink transmission exceeds the predetermined value includes: in a case that the total amount of frequency domain resources used for the first downlink transmission exceeds the predetermined value, demodulating the first downlink transmission and performing at least one of the following: expecting that time from the last time unit occupied by the first downlink transmission to the first one time unit occupied by a second uplink transmission is not less than a first time threshold; not expecting that time from the last time unit occupied by the first downlink transmission to the first one time unit occupied by a second uplink transmission is less than a first time threshold; dropping a second uplink transmission in a case that time from the last time unit occupied by the first downlink transmission to the first one time unit occupied by the second uplink transmission is less than a first time threshold; performing a second uplink transmission in a case that time from the last time unit occupied by the first downlink transmission to the first one time unit occupied by the second uplink transmission is not less than a first time threshold; and determining that a random access procedure corresponding to the first downlink transmission has failed in a case that time from the last time unit occupied by the first downlink transmission to the first one time unit occupied by a second uplink transmission is less than a first time threshold; where the second uplink transmission is an uplink transmission scheduled by the first downlink transmission.

Optionally, the determining that a random access procedure corresponding to the first downlink transmission has failed in a case that time from the last time unit occupied by the first downlink transmission to the first one time unit occupied by a second uplink transmission is less than a first time threshold includes: determining that the random access procedure corresponding to the first downlink transmission has failed in a case that the number of first downlink transmissions is a first quantity and the time from the last time unit occupied by the first quantity of first downlink transmissions to the first one time unit occupied by the second uplink transmission is less than the first time threshold; where the first quantity of first downlink transmissions include an initial transmission and/or a retransmission of the first downlink transmission.

Optionally, the performing, by the processor 610, a first operation in a case that a total amount of frequency domain resources used for the first downlink transmission exceeds the predetermined value includes: in a case that the number of first downlink transmissions is a second quantity and the total amount of frequency domain resources used for the second quantity of first downlink transmissions exceeds the predetermined value, performing at least one of the following: not requesting the terminal to demodulate the first downlink transmission; skipping demodulation of the first downlink transmission; determining, by the terminal, whether to demodulate the first downlink transmission; and determining that a random access procedure corresponding to the first downlink transmission has failed; where the second quantity of first downlink transmissions include an initial transmission and/or a retransmission of the first downlink transmission.

Optionally, the second operation includes at least one of the following: dropping the first uplink transmission; dropping the first uplink transmission in a case that time from the last time unit occupied by a second downlink transmission to the first one time unit occupied by the first uplink transmission is less than a second time threshold; performing the first uplink transmission in a case that time from the last time unit occupied by a second downlink transmission to the first one time unit occupied by the first uplink transmission is less than a second time threshold; and determining that a random access procedure corresponding to the first uplink transmission has failed; where the first uplink transmission is an uplink transmission scheduled by the second downlink transmission.

Optionally, the determining that a random access procedure corresponding to the first uplink transmission has failed includes: determining that the random access procedure corresponding to the first uplink transmission has failed in a case that the number of first uplink transmissions is a third quantity and the third quantity of first uplink transmissions are scheduled by the third quantity of second downlink transmissions received continuously; where the third quantity of second downlink transmissions include an initial transmission and/or a retransmission of the second downlink transmission.

Optionally, the processing, by the processor 610, a target transmission based on bandwidth capability includes: processing the target transmission based on the bandwidth capability and first information; where the first information includes at least one of the following: whether the terminal transmits terminal capability information; whether the terminal transmits second information, where the second information includes terminal identification information or early terminal identification information, and the terminal identification information or early terminal identification information is used to indicate to a network-side device that a type of the terminal at least includes that the bandwidth capability of the terminal is the predetermined value; whether the terminal is configured with a separate initial bandwidth part BWP, where the initial BWP includes an initial uplink BWP and/or an initial downlink BWP; and carrier information of third information, where the third information includes the terminal capability information and/or the second information.

Optionally, the processing, by the processor 610, the target transmission based on the bandwidth capability and first information includes: in a case that the first information includes at least one of those: the terminal has transmitted the terminal capability information, the second information, the carrier information of the second information, and the terminal is configured with a separate initial BWP, performing at least one of the following: expecting that a total amount of frequency domain resources used for the target transmission does not exceed the predetermined value; demodulating the first downlink transmission in a case that the total amount of frequency domain resources used for the first downlink transmission exceeds the predetermined value, and expecting that the time from the last time unit for receiving the first downlink transmission to the first one time unit occupied by the second uplink transmission is not less than a first time threshold; determining that the random access procedure has failed in a case that the first downlink transmission is the first-time retransmission and the total amount of frequency domain resources used for the first downlink transmission exceeds the predetermined value; expecting that time from the last time unit for receiving the first downlink transmission to the first one time unit occupied by the first uplink transmission is not less than the second time threshold in a case that the total amount of frequency domain resources used for the first uplink transmission exceeds the predetermined value; and determining that the random access procedure has failed in a case that the first uplink transmission is an uplink transmission scheduled for the 1st retransmission and the total amount of frequency domain resources used for the first uplink transmission exceeds the predetermined value.

Optionally, the first time threshold is determined based on first reference time and time required by the terminal to process a downlink transmission on a first designated frequency domain resource, and the first designated frequency domain resource is determined based on a resource difference between the total amount of frequency domain resources used for the first downlink transmission and the predetermined value.

Optionally, the first time threshold $T_{min}$ is determined using the following formula:

$$T_{min} = T1 + \left\lceil \frac{(N1\text{-}M)}{M} \right\rceil * N_{T,1}$$

; where T1 is the first reference time, N1 is the total amount of frequency domain resources used for the first downlink transmission, M is the predetermined value, and $N_{T,1}$ is a duration of N1 time units corresponding to PDSCH processing time in terminal processing capability 1 when an additional physical downlink shared channel PDSCH demodulation reference signal DM-RS is configured.

Optionally, the second time threshold is determined based on second reference time and preparation time required by the terminal to transmit an uplink transmission on a second designated frequency domain resource, and the second designated frequency domain resource is determined based on a resource difference between the frequency domain resource used for the first uplink transmission and the predetermined value.

Optionally, the second time threshold $T'_{min}$ is determined using the following formula:

$$T'_{min} = T2 + \left\lceil \frac{(N2\text{-}M)}{M} \right\rceil * N_{T,2}$$

; where T2 is the second reference time, N2 is the total amount of frequency domain resources used for the first uplink transmission, M is the predetermined value, and $N_{T,2}$ is a duration of N2 time units corresponding to PUSCH processing time in terminal processing capability 1 when an additional physical uplink shared channel PUSCH DM-RS is configured.

Optionally, the terminal capability information includes at least one of the following: maximum supported bandwidth capability is 20 MHz; and maximum supported baseband bandwidth capability is 5 MHz.

Optionally, the separate initial BWP includes at least one of the following: maximum bandwidth of the separate initial BWP does not exceed 20 MHz; and maximum bandwidth of the separate initial BWP does not exceed 5 MHz.

Optionally, the second information is carried by messages MSG 1 and/or MSG 3 for transmission.

Optionally, MSG 1 carries shared second information, and/or MSG 3 carries shared or specific second information.

Optionally, at least one of the following is satisfied: in a four-step random access procedure, the first downlink transmission includes an initial transmission and/or a retransmission of MSG 2, and the first uplink transmission includes first feedback information and/or initial transmission or retransmission of MSG 3, where MSG 3 is scheduled by MSG 2 or target DCI and the first feedback information corresponds to MSG 4; in a two-step random access procedure, the first downlink transmission is an initial transmission and/or a retransmission of MSG B, and the first uplink transmission includes MSG A and/or second feedback information, where the second feedback information corresponds to MSG B; and in a small data transmission procedure, the first uplink transmission includes a PUSCH based on a configured grant and/or a PUSCH based on random access.

It can be understood that the foregoing implementations provided in the embodiments have the same or equivalent features as those mentioned in the method embodiments 200 to 400. Therefore, related descriptions in the method embodiments 200 to 400 can be referenced for the implementations in the embodiments, with the same or equivalent technical effects achieved. To avoid repetition, details are not described herein again.

An embodiment of this application further provides a readable storage medium, where the readable storage medium stores a program or instructions, and when the program or instructions are executed by a processor, the processes of the foregoing embodiments 200 to 400 of the method are implemented, with the same technical effects achieved. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, or an optical disc.

An embodiment of this application further provides a chip, where the chip includes a processor and a communication interface, the communication interface is coupled to the processor, and the processor is configured to run a program or instructions on the network-side device to implement the processes of the foregoing embodiments 200 to 400 of the method, with the same technical effects. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program product, where the computer program product includes a processor, a memory, and a program or instructions stored in the memory and capable of running on the processor. When the program or instructions are executed by the processor, the processes of the foregoing embodiments 200 to 400 of the method are implemented, with the same technical effects achieved. To avoid repetition, details are not described herein again.

An embodiment of this application further provides a communication system, including a terminal and a network-side device, where the terminal can be configured to implement the processes of the foregoing embodiments 200 to 400 of the method, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

**Claims**

1. A communication method comprising:

processing, by a terminal, a target transmission based on bandwidth capability; wherein
the bandwidth capability of the terminal is a predetermined value, the predetermined value is less than or equal to 5 MHz, and the target transmission comprises a first downlink transmission and/or a first uplink transmission.

2. The method according to claim 1, wherein the processing, by a terminal, a target transmission based on bandwidth capability comprises at least one of the following:

expecting that a total amount of frequency domain resources used for the first downlink transmission does not exceed the predetermined value;
not expecting that a total amount of frequency domain resources used for the first downlink transmission exceeds the predetermined value;
performing a first operation in a case that a total amount of frequency domain resources used for the first downlink transmission exceeds the predetermined value;
expecting that a total amount of frequency domain resources configured or scheduled for the first uplink transmission does not exceed the predetermined value;
not expecting that a total amount of frequency domain resources configured or scheduled for the first uplink transmission exceeds the predetermined value; and
performing, by the terminal, a second operation in a case that a total amount of frequency domain resources configured or scheduled for the first uplink transmission exceeds the predetermined value.

3. The method according to claim 2, wherein the performing a first operation in a case that a total amount of frequency domain resources used for the first downlink transmission exceeds the predetermined value comprises:
in a case that the total amount of frequency domain resources used for the first downlink transmission exceeds the predetermined value, demodulating, by the terminal, the first downlink transmission and performing at least one of the following:

expecting that time from the last time unit occupied by the first downlink transmission to the first one time unit occupied by a second uplink transmission is not less than a first time threshold;
not expecting that time from the last time unit occupied by the first downlink transmission to the first one time unit occupied by a second uplink transmission is less than a first time threshold;
dropping a second uplink transmission in a case that time from the last time unit occupied by the first downlink transmission to the first one time unit occupied by the second uplink transmission is less than a first time threshold;
performing a second uplink transmission in a case that time from the last time unit occupied by the first downlink transmission to the first one time unit occupied by the second uplink transmission is not less than a first time threshold; and
determining that a random access procedure corresponding to the first downlink transmission has failed in a case that time from the last time unit occupied by the first downlink transmission to the first one time unit occupied by a second uplink transmission is less than a first time threshold; wherein
the second uplink transmission is an uplink transmission scheduled by the first downlink transmission.

4. The method according to claim 3, wherein the determining that a random access procedure corresponding to the first downlink transmission has failed in a case that time from the last time unit occupied by the first downlink transmission to the first one time unit occupied by a second uplink transmission is less than a first time threshold comprises:

determining that the random access procedure corresponding to the first downlink transmission has failed in a case that the number of first downlink transmissions is a first quantity and the time from the last time unit occupied by the first quantity of first downlink transmissions to the first one time unit occupied by the second uplink transmission is less than the first time threshold; wherein
the first quantity of first downlink transmissions comprise an initial transmission and/or a retransmission of the first downlink transmission.

5. The method according to claim 2, wherein the performing a first operation in a case that a total amount of frequency domain resources used for the first downlink transmission exceeds the predetermined value comprises:
in a case that the number of first downlink transmissions is a second quantity and the total amount of frequency domain resources used for the second quantity of first downlink transmissions exceeds the predetermined value, performing at least one of the following:

not requesting the terminal to demodulate the first downlink transmission;
skipping demodulation of the first downlink transmission;
determining, by the terminal, whether to demodulate the first downlink transmission; and
determining that a random access procedure corresponding to the first downlink transmission has failed; wherein
the second quantity of first downlink transmissions comprise an initial transmission and/or a retransmission of the first downlink transmission.

6. The method according to claim 2, wherein the second operation comprises at least one of the following:

dropping the first uplink transmission;
dropping the first uplink transmission in a case that time from the last time unit occupied by a second downlink transmission to the first one time unit occupied by the first uplink transmission is less than a second time threshold;
performing the first uplink transmission in a case that time from the last time unit occupied by a second downlink transmission to the first one time unit occupied by the first uplink transmission is less than a second time threshold; and
determining that a random access procedure corresponding to the first uplink transmission has failed; wherein
the first uplink transmission is an uplink transmission scheduled by the second downlink transmission.

7. The method according to claim 6, wherein the determining that a random access procedure corresponding to the first uplink transmission has failed comprises:

determining that the random access procedure corresponding to the first uplink transmission has failed in a case that the number of first uplink transmissions is a third quantity and the third quantity of first uplink transmissions are scheduled by the third quantity of second downlink transmissions received continuously; wherein
the third quantity of second downlink transmissions comprise an initial transmission and/or a retransmission of the second downlink transmission.

8. The method according to any one of claims 1 to 7, wherein the processing, by a terminal, a target transmission based on bandwidth capability comprises:

processing, by the terminal, the target transmission based on the bandwidth capability and first information; wherein
the first information comprises at least one of the following:

whether the terminal transmits terminal capability information;
whether the terminal transmits second information, wherein the second information comprises terminal identification information or early terminal identification information, and the terminal identification information or early terminal identification information is used to indicate to a network-side device that a type of the terminal at least comprises that the bandwidth capability of the terminal is the predetermined value;
whether the terminal is configured with a separate initial bandwidth part BWP, wherein the initial BWP comprises an initial uplink BWP and/or an initial downlink BWP; and
carrier information of third information, wherein the third information comprises the terminal capability information and/or the second information.

9. The method according to claim 8, wherein the processing, by the terminal, the target transmission based on the bandwidth capability and first information comprises:

in a case that the first information comprises at least one of those: the terminal has transmitted the terminal capability information, the second information, the carrier information of the second information, and the terminal is configured with a separate initial BWP, performing at least one of the following:

expecting that a total amount of frequency domain resources used for the target transmission does not exceed the predetermined value;

demodulating the first downlink transmission in a case that the total amount of frequency domain resources used for the first downlink transmission exceeds the predetermined value, and expecting that the time from the last time unit for receiving the first downlink transmission to the first one time unit occupied by the second uplink transmission is not less than a first time threshold;

determining that the random access procedure has failed in a case that the first downlink transmission is the first-time retransmission and the total amount of frequency domain resources used for the first downlink transmission exceeds the predetermined value;

expecting that time from the last time unit for receiving the first downlink transmission to the first one time unit occupied by the first uplink transmission is not less than the second time threshold in a case that the total amount of frequency domain resources used for the first uplink transmission exceeds the predetermined value; and

determining that the random access procedure has failed in a case that the first uplink transmission is an uplink transmission scheduled for the 1st retransmission and the total amount of frequency domain resources used for the first uplink transmission exceeds the predetermined value.

10. The method according to claim 3, 4, or 9, wherein the first time threshold is determined based on first reference time and time required by the terminal to process a downlink transmission on a first designated frequency domain resource, and the first designated frequency domain resource is determined based on a resource difference between the total amount of frequency domain resources used for the first downlink transmission and the predetermined value.

11. The method according to claim 10, wherein the first time threshold $T_{min}$ is determined using the following formula:

$$T_{min} = T1 + \left\lceil \frac{(N1\text{-}M)}{M} \right\rceil * N_{T,1},$$

wherein

T1 is the first reference time, N1 is the total amount of frequency domain resources used for the first downlink transmission, M is the predetermined value, and $N_{T,1}$ is a duration of N1 time units corresponding to PDSCH processing time in terminal processing capability 1 when an additional physical downlink shared channel PDSCH demodulation reference signal DM-RS is configured.

12. The method according to claim 6 or 9, wherein the second time threshold is determined based on second reference time and preparation time required by the terminal to transmit an uplink transmission on a second designated frequency domain resource, and the second designated frequency domain resource is determined based on a resource difference between the frequency domain resource used for the first uplink transmission and the predetermined value.

13. The method according to claim 12, wherein the second time threshold $T'_{min}$ is determined using the following formula:

$$T'_{min} = T2 + \left\lceil \frac{(N2\text{-}M)}{M} \right\rceil * N_{T,2},$$

wherein

T2 is the second reference time, N2 is the total amount of frequency domain resources used for the first uplink transmission, M is the predetermined value, and $N_{T,2}$ is a duration of N2 time units corresponding to PUSCH processing time in terminal processing capability 1 when an additional physical uplink shared channel PUSCH DM-RS is configured.

14. The method according to any one of claims 6 to 13, wherein the terminal capability information comprises at least one of the following:

maximum supported bandwidth capability is 20 MHz; and
maximum supported baseband bandwidth capability is 5 MHz.

15. The method according to claim 8 or 9, wherein the separate initial BWP comprises at least one of the following:

maximum bandwidth of the separate initial BWP does not exceed 20 MHz; and
maximum bandwidth of the separate initial BWP does not exceed 5 MHz.

16. The method according to claim 8 or 9, wherein the second information is carried by messages MSG 1 and/or MSG 3 for transmission.

17. The method according to claim 16, wherein MSG 1 carries shared second information, and/or MSG 3 carries shared or specific second information.

18. The method according to any one of claims 2 to 17, wherein at least one of the following is satisfied:

in a four-step random access procedure, the first downlink transmission comprises an initial transmission and/or a retransmission of MSG 2, and the first uplink transmission comprises first feedback information and/or initial transmission or retransmission of MSG 3, wherein MSG 3 is scheduled by MSG 2 or target DCI and the first feedback information corresponds to MSG 4;
in a two-step random access procedure, the first downlink transmission is an initial transmission and/or a retransmission of MSG B, and the first uplink transmission comprises MSG A and/or second feedback information, wherein the second feedback information corresponds to MSG B; and
in a small data transmission procedure, the first uplink transmission comprises a PUSCH based on a configured grant and/or a PUSCH based on random access.

19. A communication apparatus comprising:

a processing module, configured to process a target transmission based on bandwidth capability; wherein the bandwidth capability of a terminal is a predetermined value, the predetermined value is less than or equal to 5 MHz, and the target transmission comprises a first downlink transmission and/or a first uplink transmission.

20. The apparatus according to claim 19, wherein the processing, by the processing module, a target transmission based on bandwidth capability comprises at least one of the following:

expecting that a total amount of frequency domain resources used for the first downlink transmission does not exceed the predetermined value;
not expecting that a total amount of frequency domain resources used for the first downlink transmission exceeds the predetermined value;
performing a first operation in a case that a total amount of frequency domain resources used for the first downlink transmission exceeds the predetermined value;
expecting that a total amount of frequency domain resources configured or scheduled for the first uplink transmission does not exceed the predetermined value;
not expecting that a total amount of frequency domain resources configured or scheduled for the first uplink transmission exceeds the predetermined value; and
performing, by the terminal, a second operation in a case that a total amount of frequency domain resources configured or scheduled for the first uplink transmission exceeds the predetermined value.

21. The apparatus according to claim 20, wherein the performing, by the processing module, a first operation in a case that a total amount of frequency domain resources used for the first downlink transmission exceeds the predetermined value comprises:
in a case that the total amount of frequency domain resources used for the first downlink transmission exceeds the predetermined value, demodulating the first downlink transmission and performing at least one of the following:

expecting that time from the last time unit occupied by the first downlink transmission to the first one time unit occupied by a second uplink transmission is not less than a first time threshold;

not expecting that time from the last time unit occupied by the first downlink transmission to the first one time unit occupied by a second uplink transmission is less than a first time threshold;

dropping a second uplink transmission in a case that time from the last time unit occupied by the first downlink transmission to the first one time unit occupied by the second uplink transmission is less than a first time threshold;

performing a second uplink transmission in a case that time from the last time unit occupied by the first downlink transmission to the first one time unit occupied by the second uplink transmission is not less than a first time threshold; and

determining that a random access procedure corresponding to the first downlink transmission has failed in a case that time from the last time unit occupied by the first downlink transmission to the first one time unit occupied by a second uplink transmission is less than a first time threshold; wherein

the second uplink transmission is an uplink transmission scheduled by the first downlink transmission.

22. The apparatus according to claim 21, wherein the determining that a random access procedure corresponding to the first downlink transmission has failed in a case that time from the last time unit occupied by the first downlink transmission to the first one time unit occupied by a second uplink transmission is less than a first time threshold comprises:

determining that the random access procedure corresponding to the first downlink transmission has failed in a case that the number of first downlink transmissions is a first quantity and the time from the last time unit occupied by the first quantity of first downlink transmissions to the first one time unit occupied by the second uplink transmission is less than the first time threshold; wherein

the first quantity of first downlink transmissions comprise an initial transmission and/or a retransmission of the first downlink transmission.

23. The apparatus according to claim 20, wherein the performing, by the processing module, a first operation in a case that a total amount of frequency domain resources used for the first downlink transmission exceeds the predetermined value comprises:

in a case that the number of first downlink transmissions is a second quantity and the total amount of frequency domain resources used for the second quantity of first downlink transmissions exceeds the predetermined value, performing at least one of the following:

not requesting the terminal to demodulate the first downlink transmission;

skipping demodulation of the first downlink transmission;

determining, by the terminal, whether to demodulate the first downlink transmission; and

determining that a random access procedure corresponding to the first downlink transmission has failed; wherein the second quantity of first downlink transmissions comprise an initial transmission and/or a retransmission of the first downlink transmission.

24. The apparatus according to claim 20, wherein the second operation comprises at least one of the following:

dropping the first uplink transmission;

dropping the first uplink transmission in a case that time from the last time unit occupied by a second downlink transmission to the first one time unit occupied by the first uplink transmission is less than a second time threshold;

performing the first uplink transmission in a case that time from the last time unit occupied by a second downlink transmission to the first one time unit occupied by the first uplink transmission is less than a second time threshold; and

determining that a random access procedure corresponding to the first uplink transmission has failed; wherein the first uplink transmission is an uplink transmission scheduled by the second downlink transmission.

25. The apparatus according to claim 24, wherein the determining that a random access procedure corresponding to the first uplink transmission has failed comprises:

determining that the random access procedure corresponding to the first uplink transmission has failed in a case that the number of first uplink transmissions is a third quantity and the third quantity of first uplink transmissions are scheduled by the third quantity of second downlink transmissions received continuously; wherein

the third quantity of second downlink transmissions comprise an initial transmission and/or a retransmission of the second downlink transmission.

26. The apparatus according to claim 21 or 22, wherein the processing, by the processing module, a target transmission based on bandwidth capability comprises:

processing the target transmission based on the bandwidth capability and first information; wherein the first information comprises at least one of the following:

whether the terminal transmits terminal capability information;
whether the terminal transmits second information, wherein the second information comprises terminal identification information or early terminal identification information, and the terminal identification information or early terminal identification information is used to indicate to a network-side device that a type of the terminal at least comprises that the bandwidth capability of the terminal is the predetermined value;
whether the terminal is configured with a separate initial bandwidth part BWP, wherein the initial BWP comprises an initial uplink BWP and/or an initial downlink BWP; and
carrier information of third information, wherein the third information comprises the terminal capability information and/or the second information.

27. The apparatus according to claim 26, wherein the processing, by the processing module, the target transmission based on the bandwidth capability and first information comprises:
in a case that the first information comprises at least one of those: the terminal has transmitted the terminal capability information, the second information, the carrier information of the second information, and the terminal is configured with a separate initial BWP, performing at least one of the following:

expecting that a total amount of frequency domain resources used for the target transmission does not exceed the predetermined value;
demodulating the first downlink transmission in a case that the total amount of frequency domain resources used for the first downlink transmission exceeds the predetermined value, and expecting that the time from the last time unit for receiving the first downlink transmission to the first one time unit occupied by the second uplink transmission is not less than a first time threshold;
determining that the random access procedure has failed in a case that the first downlink transmission is the first-time retransmission and the total amount of frequency domain resources used for the first downlink transmission exceeds the predetermined value;
expecting that time from the last time unit for receiving the first downlink transmission to the first one time unit occupied by the first uplink transmission is not less than the second time threshold in a case that the total amount of frequency domain resources used for the first uplink transmission exceeds the predetermined value; and
determining that the random access procedure has failed in a case that the first uplink transmission is an uplink transmission scheduled for the 1st retransmission and the total amount of frequency domain resources used for the first uplink transmission exceeds the predetermined value.

28. The apparatus according to claim 21, 22, or 27, wherein the first time threshold is determined based on first reference time and time required by the terminal to process a downlink transmission on a first designated frequency domain resource, and the first designated frequency domain resource is determined based on a resource difference between the total amount of frequency domain resources used for the first downlink transmission and the predetermined value.

29. The apparatus according to claim 28, wherein the first time threshold $T_{min}$ is determined using the following formula:

$$T_{min} = T1 + \left\lceil \frac{(\text{N1-M})}{M} \right\rceil * N_{T,1},$$

wherein
T1 is the first reference time, N1 is the total amount of frequency domain resources used for the first downlink transmission, M is the predetermined value, and $N_{T,1}$ is a duration of N1 time units corresponding to PDSCH processing time in terminal processing capability 1 when an additional physical downlink shared channel PDSCH demodulation reference signal DM-RS is configured.

30. The apparatus according to claim 24 or 27, wherein the second time threshold is determined based on second reference time and preparation time required by the terminal to transmit an uplink transmission on a second designated frequency domain resource, and the second designated frequency domain resource is determined based on a resource difference between the frequency domain resource used for the first uplink transmission and the predetermined value.

31. The apparatus according to claim 30, wherein the second time threshold T'$_{min}$ is determined using the following formula:

$$T'_{min} = T2 + \left\lceil \frac{(N2\text{-}M)}{M} \right\rceil * N_{T,2},$$

wherein
T2 is the second reference time, N2 is the total amount of frequency domain resources used for the first uplink transmission, M is the predetermined value, and $N_{T,2}$ is a duration of N2 time units corresponding to PUSCH processing time in terminal processing capability 1 when an additional physical uplink shared channel PUSCH DM-RS is configured.

32. The apparatus according to any one of claims 24 to 31, wherein the terminal capability information comprises at least one of the following:

    maximum supported bandwidth capability is 20 MHz; and
    maximum supported baseband bandwidth capability is 5 MHz.

33. The apparatus according to claim 26 or 27, wherein the separate initial BWP comprises at least one of the following:

    maximum bandwidth of the separate initial BWP does not exceed 20 MHz; and
    maximum bandwidth of the separate initial BWP does not exceed 5 MHz.

34. The apparatus according to claim 26 or 27, wherein the second information is carried by messages MSG 1 and/or MSG 3 for transmission.

35. The apparatus according to claim 34, wherein MSG 1 carries shared second information, and/or MSG 3 carries shared or specific second information.

36. The apparatus according to any one of claims 20 to 35, wherein at least one of the following is satisfied:

    in a four-step random access procedure, the first downlink transmission comprises an initial transmission and/or a retransmission of MSG 2, and the first uplink transmission comprises first feedback information and/or initial transmission or retransmission of MSG 3, wherein MSG 3 is scheduled by MSG 2 or target DCI and the first feedback information corresponds to MSG 4;
    in a two-step random access procedure, the first downlink transmission is an initial transmission and/or a retransmission of MSG B, and the first uplink transmission comprises MSG A and/or second feedback information, wherein the second feedback information corresponds to MSG B; and
    in a small data transmission procedure, the first uplink transmission comprises a PUSCH based on a configured grant and/or a PUSCH based on random access.

37. A terminal, comprising a processor and a memory, wherein a program or instructions capable of running on the processor are stored in the memory, and when the program or instructions are executed by the processor, the steps of the method according to any one of claims 1 to 18 are implemented.

38. A readable storage medium, wherein a program or instructions are stored in the readable storage medium, and when the program or instructions are executed by a processor, the steps of the method according to any one of claims 1 to 18 are implemented.

FIG. 1

200

S210

A terminal processes a target transmission based on bandwidth capability

FIG. 2

300

S310

A terminal processes a target transmission based on bandwidth capability

FIG. 3

400

S410

S411

A terminal processes a target transmission based on bandwidth capability and first information

FIG. 4

500

510

Processing module

FIG. 5

600

FIG. 6

## INTERNATIONAL SEARCH REPORT

| International application No. |
| --- |
| **PCT/CN2023/128585** |

| A. | CLASSIFICATION OF SUBJECT MATTER |
| --- | --- |

H04W 28/02(2009.01)i

According to International Patent Classification (IPC) or to both national classification and IPC

| B. | FIELDS SEARCHED |
| --- | --- |

Minimum documentation searched (classification system followed by classification symbols)

IPC:H04B,H04W,H04L

Documentation searched other than minimum documentation to the extent that such documents are included in the fields searched

Electronic data base consulted during the international search (name of data base and, where practicable, search terms used)

CNTXT, ENTXTC, DWPI, WPABS, 3GPP: 带宽, 能力, 上行, 下行, 随机接入, 小数据传输, 时间, 阈值, 间隔, 间隙, 失败, 放弃, bandwidth, capability, uplink, UL, downlink, DL, random access, RA, small data transmission, SDT, time, threshold, gap, failure, abandon

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2022126637 A1 (GUANGDONG OPPO MOBILE TELECOMMUNICATIONS CORP., LTD.) 23 June 2022 (2022-06-23)<br>description, page 4, line 50 to page 7, line 51, and page 12, lines 15-35 | 1-2, 8-9, 14-20, 26-27, 32-38 |
| A | CN 115209535 A (HUAWEI TECHNOLOGIES CO., LTD.) 18 October 2022 (2022-10-18)<br>entire document | 1-38 |
| A | CN 113676957 A (HUAWEI TECHNOLOGIES CO., LTD.) 19 November 2021 (2021-11-19)<br>entire document | 1-38 |
| A | WO 2022028359 A1 (HUAWEI TECHNOLOGIES CO., LTD.) 10 February 2022 (2022-02-10)<br>entire document | 1-38 |
| A | NORDIC SEMICONDUCTOR ASA. "On further complexity reduction of NR UE"<br>*3GPP TSG RAN WG1 #110b, R1-2210196*, 19 October 2022 (2022-10-19),<br>entire document | 1-38 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 January 2024** | **25 January 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/128585**

| Patent document cited in search report | | | Publication date (day/month/year) | Patent family member(s) | | | Publication date (day/month/year) |
|---|---|---|---|---|---|---|---|
| WO | 2022126637 | A1 | 23 June 2022 | US | 2023328707 | A1 | 12 October 2023 |
| | | | | EP | 4247075 | A1 | 20 September 2023 |
| | | | | CN | 116261889 | A | 13 June 2023 |
| CN | 115209535 | A | 18 October 2022 | WO | 2022214006 | A1 | 13 October 2022 |
| CN | 113676957 | A | 19 November 2021 | WO | 2021227755 | A1 | 18 November 2021 |
| | | | | EP | 4142363 | A1 | 01 March 2023 |
| | | | | US | 2023079810 | A1 | 16 March 2023 |
| | | | | JP | 2023525852 | A | 19 June 2023 |
| WO | 2022028359 | A1 | 10 February 2022 | CN | 114071427 | A | 18 February 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022113724862